Europäisches Patentamt

European Patent Office

Office européen des brevets

(11) Publication number: **0 040 908**

**B1**

(12) **EUROPEAN PATENT SPECIFICATION**

(45) Date of publication of patent specification: **29.06.88**

(51) Int. Cl.⁴: **F 16 G 5/08**

(21) Application number: **81301572.4**

(22) Date of filing: **10.04.81**

(54) Power transmission belt.

(30) Priority: **24.05.80 JP 71606/80**
**14.06.80 JP 83606/80**

(43) Date of publication of application:
**02.12.81 Bulletin 81/48**

(45) Publication of the grant of the patent:
**29.06.88 Bulletin 88/26**

(84) Designated Contracting States:
**AT CH DE FR GB IT LI NL SE**

(56) References cited:
**EP-A-0 009 389**
**EP-A-0 014 561**
**GB-A-1 144 519**
**GB-A-1 176 718**
**GB-A-1 187 266**
**GB-A-1 272 389**
**US-A-2 210 073**
**US-A-2 802 511**
**US-A-3 863 516**
**US-A-3 968 703**
**US-A-4 011 766**
**US-A-4 083 261**
**US-A-4 177 686**

(73) Proprietor: **MITSUBOSHI BELTING LTD.**
**No. 1-21, Hamazoedori 4-Chome Nagata-ku**
**Kobe-shi Hyogo (JP)**

(72) Inventor: **Imamura, Jungi**
**No. 501-20, Minbudani Shioyacho Tarumiku**
**Kobe-shi Hyogo (JP)**

(74) Representative: **Jones, Michael Raymond et al**
**HASELTINE LAKE & CO. Hazlitt House 28**
**Southampton Buildings Chancery Lane**
**London WC2A 1AT (GB)**

Courier Press, Leamington Spa, England.

## Description

This invention relates to power transmission belts and in particular to multiple rib power transmission belts.

In one form of multiple rib power transmission belt, a plurality of ribs are maintained in parallel, side-by-side spaced relationship by an outer band to which the ribs are joined. In one form of such a banded belt construction, the ribs are covered with a fabric. Such a construction is illustrated in U.S. Patent No. 3,523,461 of Paul E. Nemecek et al. Similar covered rib banded belts are illustrated in U.S. Patents Nos. 3,564,933 of Donald E. Clinkenbeard, 3,853,017 of Jack D. White et al, 3,996,813 of Dewey D. Henderson et al, and 4,011,766 of Dale L. Waugh.

Another example of a multiple rib power transmission belt construction is illustrated in U.S. Patent No. 4,177,688 of Anderson W. Howerton et al. In this patent, the V-belt portions define distal compression sections which are free of covering fabric.

A further example of a known multiple rib power transmission belt is described in US-A-3,948,113, which discloses a power transmission belt having a plurality of raw edge ribs, joined to a transversely extending portion to define a multiple rib belt, and longitudinally extending tensile cords. This document further discloses that each rib may include one or more fabric reinforcement layer for increased crack resistance.

It has been found, however, that such banded structures have a serious problem in the amount of noise developed in the use of the belt. More specifically, it has been found that noise is produced when the rib is pulled out of the pulley.

Thus, the present invention seeks to provide a multiple rib power transmission belt which, while of simple construction, minimises the noise produced by its operation.

In accordance with the present invention there is provided a power transmission belt having:

a plurality of inner, transversely spaced, parallel raw edge ribs, adjacent ribs being contiguous at their outer edges;

an outer transversely extending portion to which the ribs are joined to define a multiple rib belt, the outer transversely extending portion comprising a binding rubber layer adjacent the outermost portion of the ribs;

a plurality of longitudinally extending tensile cords; and

at least one layer of transversely extending reinforcing fabric disposed in each rib and having side edges exposed at the raw edge rib sides;

characterised in that the or each layer of reinforcing fabric is buried within an innermost compression portion of each rib, which innermost compression portion defines the distal portion of each rib, and the or each layer of reinforcing fabric is maintained in lateral alignment with the corresponding fabric layer in each of the other ribs by the binding layer which maintains the ribs in a parallel relationship to ensure silent running of the belt.

Short transversely extending reinforcing fibres may be provided in the compression portion of the ribs outwardly of the reinforcing fabric.

Preferably the tensile cords are disposed within a tensile body portion of the belt in the outer portion of the belt, and the belt defines grooves between the ribs, which ribs extend inwardly from the binding rubber layer to the innermost compression portion.

The tensile body portion may be provided in the ribs adjacent the outer portion of the belt with the grooves between the ribs extending inwardly from the outer portion of the belt to the innermost portion.

Preferably the innermost compression portion of each rib defines a plurality of longitudinally spaced, transversely extending inwardly facing grooves.

The buried fabric may comprise a fabric having at least one of the following characteristics: (a) comprising a canvas fabric; (b) formed of cotton yarn; (c) including a warp formed of crimped nylon yarns; (d) formed of yarns formed of a blend of cotton yarn and synthetic resin fibres; (e) includes a warp formed or crimped yarn; (f) comprises a warp and a woof having a crossing angle in the range of approximately 95 degrees to 150 degrees; and (g) is bias cut.

In the illustrated embodiment, the buried fabric layer includes a layer of rubber laminated to the fabric.

Thus, the power transmission belt in accordance with the present invention is extremely simple and economical of construction, while yet providing the highly desirable low-noise operation characteristics discussed above.

For a better understanding of the present invention, and to show how the same may be carried into effect, reference will now be made, by way of example, to the accompanying drawings in which:-

Figure 1 is a perspective view of a power transmission system having a power transmission belt embodying the invention;

Figure 2 is a fragmentary sectional perspective view of a power transmission belt embodying the invention;

Figure 3 is a fragmentary sectional view of a modified form of power transmission belt embodying the invention; and

Figure 4 is a fragmentary sectional perspective view of still another modified form of power transmission belt embodying the invention.

In the exemplary embodiment of the invention as disclosed in the drawing, a power transmission belt generally designated 10 embodying the invention is shown for use in transmitting power between a pair of multiple grooved pulleys 11 and 12. The invention comprehends the construction of the power transmission belt so as to have effectively minimized noise in the power transmission operation thereof, such as resulting from the movement of the belt outwardly from the pulley as the belt passes therefrom.

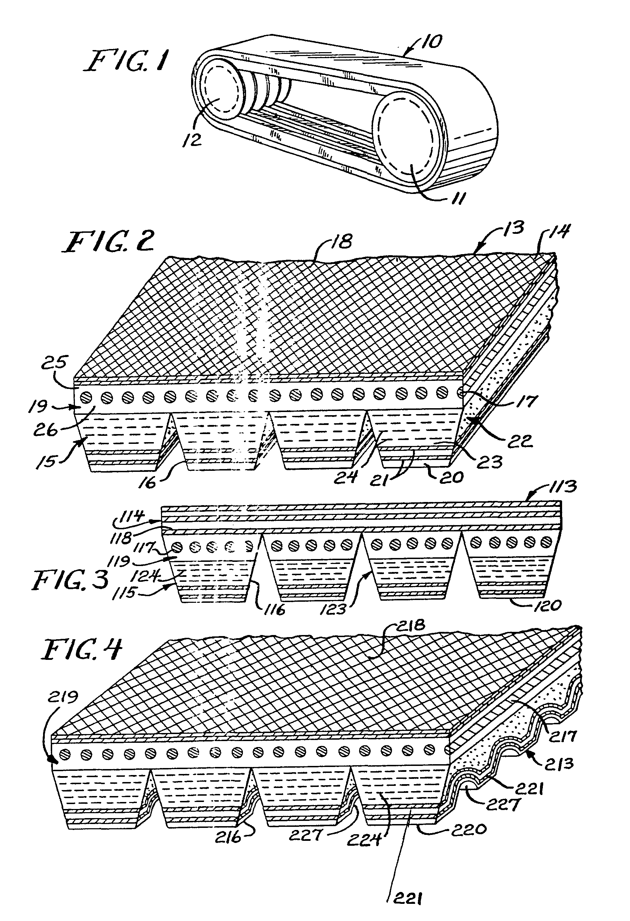

The invention comprehends the provision of the belt as a multiple rib banded belt, such as belt construction 13 illustrated in Figure 2 of the drawing. Thus, as shown therein, the banded belt includes an outer band portion 14 to which are joined a plurality of ribs 15 separated from each other by grooves 16 and extending in parallel relationship longitudinally of the continuous extent of the belt illustrated in Figure 1.

As seen in Figure 2, each rib is of trapezoidal cross section. In the embodiment of Figure 2, a plurality of tensile cords 17 are provided in the band portion 14 of the belt outwardly of the ribs. The tensile cords are formed of high strength material so as to limit the longitudinal extensibility of the belt in use. As further shown in Figure 2, the band portion 14 may be provided with an outer fabric cover 18.

Grooves 16 extend to the tensile body portion 19 of band 14 in which the tensile cords 17 are disposed. Thus, in the embodiment of Figure 2, the ribs define the compression portion of the belt, having an innermost portion 20 defining the distal portion of each rib.

Buried in each of the distal portions 20 of the ribs is at least one layer of reinforcing fabric 21 extending transversely across the rib. In the embodiment of Figure 2, two such fabric layers are illustrated.

As shown, each of the ribs is a raw edge rib, i.e., having no covering fabric thereon. Thus, each of the fabric layers 21 is exposed at the raw edge, such as raw edge 22 illustrated in Figure 2.

In the illustrated embodiment, each of the fabric layers 21 is formed of a laminate of rubber and fabric.

Each rib defines a compression portion of the belt with the portion 20 thereof defining the distal innermost portion of the compression portion. Outwardly of the fabric layers 21, the compression portion is provided with a plurality of distributed short, transversely extending reinforcing fibers 24 which, as indicated in Figure 2, are exposed in the raw edge surface 22.

Tensile body 19 is defined by an upper binding rubber layer 25 and a lower binding rubber layer 26 formed of similar material, such as natural rubber, styrene butadiene rubber, chloroprene rubber, butadiene rubber, or blends thereof. The tensile cords 17, as indicated above, are formed of high strength having low elongation, and illustratively, may be formed of polyester synthetic resin, nylon, aromatic polyamides such as KEVLAR[R], and the like.

Cover fabric 18 may comprise a rubber-coated fabric canvas made of cotton yarn or blended yarn of cotton and suitable synthetic resin fibers. As shown, the cover fabric may be bias cut and may have a crossing angle between the warp and woof fibers in the range of approximately 95° to 150°. Thus, the cover fabric forms a tension portion of the belt outwardly of the tensile cords 17.

The compression portion 23 defined by the ribs may be formed of a rubber similar to that of the tensile body. The reinforcing fabric 21 may comprise a rubber-coated canvas fabric which may be formed of cotton yarn or yarn blended of cotton yarn and suitable synthetic resin fibers.

The reinforcing fabric 21 may be bias cut similar to cover fabric 18 and may have warp and woof yarns with a crossing angle in the range of approximately 95° to 150°. The reinforcing fabric yarns may comprise cotton yarns or blended yarns of cotton yarns and suitable synthetic resin fibers, both in the warp and woof.

Alternatively, the reinforcing fabric may consist of wooly-processed crimped nylon in the warp and cotton yarn or nylon yarn in the woof.

The belt construction 13 has unexpectedly been found to run extremely silently in transmitting power, such as between pulleys 11 and 12 illustrated in Figure 1.

Referring now to the embodiment of Figure 3, a belt generally designated 113 is shown to comprise a belt generally similar to belt 13 but having grooves 116 which extend through the tensile body 119 to the band 114.

The lowermost fabric layer 118 of the tension portion of the belt defined by band 114 defines the outermost extension of the grooves 116 and serves to connect the ribs 115 in accurately maintained similar extension. More specifically, the pitch line of the tensile cords 117 being disposed within the ribs provides improved power transmission by the ribs as a result of their wedged engagement in the grooves of the pulleys.

Another embodiment of the invention is illustrated in Figure 4 to comprise a power transmission belt generally designated 213 which is similar to belt 113, but wherein the distal portions 220 of the ribs are provided with transversely extending grooves 227 opening downwardly therefrom at uniformly spaced intervals longitudinally of the belt so as to effectively define cogs for providing positive displacement power transmission.

As shown in Figure 4, the reinforcing fabric 221 is buried within the distal portion 220 of the ribs so as to follow the configuration of the distal portion, including the grooves 227 in buried relationship to the entire lower surface of the ribs. As in the belt 13, a plurality of such fabric layers may be provided in the distal portion 220 of the ribs, as desired. Additionally, in each of the belts 113 and 213, short transverse fibers may be provided in the compression section outwardly of the reinforcing fabric layers to provide further improved lateral stability of the ribs.

The elements of each of belts 113 and 213 which are similar to elements of belt 13 are identified by similar reference numerals but 100 and 200 higher, respectively. Each of the belts is

similar and functions similarly, other than in the specific structural differences as discussed above.

In each of the illustrated belts, the exposure of the reinforcing fabric buried in the distal portion of the ribs to the raw edge sides of the ribs permits the rib to pull away freely from the pulley and resultingly provides unexpected substantial reduction in noise in a power-transmitting operation of the belt.

The provision of the cog grooves in the belt 213 provides improved flexibility in the belt, permitting the belt to be used with small diameter pulleys, while yet providing the highly improved noise reduction advantages of the invention.

Each of the belt constructions assures the maintained relationship between the ribs longitudinally of the belt during the power transmitting operation while avoiding the need for high dimensional accuracy, or low tolerance manufacture in effecting the highly desirable noise reduction, by effectively precluding differences in the speed of the rib portions relative to each other.

The belt construction of the present invention provides a highly improved, low noise power transmission characteristic not found in the belts of the prior art as discussed above, and is adapted for a wide range of power transmission and control functions advantageously in applications where such low noise operation is a desideratum.

The foregoing disclosure of specific embodiments is illustrative of the broad inventive concepts comprehended by the invention.

**Claims**

1. A power transmission belt (10, 13, 113, 213) having;

a plurality of inner, transversely spaced, parallel raw edge ribs (15, 115), adjacent ribs being contiguous at their outer edges;

an outer transversely extending portion (14, 114) to which the ribs are joined to define a multiple rib belt (10, 13, 113, 213), the outer transversely extending portion (14, 114) comprising a binding rubber layer (26) adjacent the outermost portion of the ribs;

a plurality of longitudinally extending tensile cords (17, 117, 217); and

at least one layer of transversely extending reinforcing fabric (21, 221) disposed in each rib and having side edges exposed at the raw edge rib sides;

characterised in that the or each layer of reinforcing fabric (21, 221) is buried within an innermost compression portion (20, 120, 220) of each rib, which innermost compression portion defines the distal portion of each rib, and the or each layer of reinforcing fabric (21, 221) is maintained in lateral alignment with the corresponding fabric layer in each of the other ribs by the binding layer which maintains the ribs in a parallel relationship to ensure silent running of the belt.

2. A power transmission belt (10, 13, 213) as claimed in claim 1, further characterised in that the tensile cords (17, 217) are disposed within a tensile body portion (19, 219) of the belt in the outer portion of the belt, and wherein the belt defines grooves (16, 216) between the ribs, which ribs extend inwardly from adjacent the binding rubber layer to the innermost compression portion.

3. A power transmission belt (10, 113) as claimed in claim 1, further characterised in that the tensile cords (117) are disposed within a tensile body portion (119) of the belt in the ribs and adjacent the outer portion of the belt, and wherein the belt defines grooves (116) between the ribs, which ribs extend inwardly from the outer portion of the belt to the innermost portion.

4. A power transmission belt (10, 213) as claimed in any preceding claim, further characterised in that the innermost compression portion (220) of each rib defines a plurality of longitudinally spaced transverse inwardly facing grooves (227).

5. A power transmission belt (10, 213) as claimed in claim 4, further characterised in that the reinforcing fabric layers (221) overlie and are spaced outwardly of the transverse grooves (227).

6. A power transmission belt (10, 213) as claimed in claim 4 or 5, further characterised in that the transverse grooves (227) are arcuate, the grooves of respective ribs being aligned transversely across the belt.

7. A power transmission belt (10, 13, 113, 213) as claimed in any preceding claim, further characterised in that short transversely extending reinforcing fibres (24, 124, 224) are provided in the compression portion (20, 120, 220) of each rib outwardly of the reinforcing fabric layer(s).

8. A power transmission belt (10, 13, 113, 213) as claimed in any preceding claim, further characterised in that the reinforcing fabric layers (21, 221) comprise a fabric having at least one of the following characteristics: (a) comprising a canvas fabric; (b) formed of cotton yarn; (c) including a warp formed of crimpled nylon yarns; (d) formed of yarns formed of a blend of cotton yarn and synthetic resin fibres; (e) including a warp formed of crimped yarn; (f) comprising a warp and a woof having a crossing angle in the range of approximately 95 degrees to 150 degrees; and (g) being bias cut.

9. A power transmission belt (10, 13, 113, 213) as claimed in any preceding claim, further characterised in that the reinforcing fabric layers (21, 221) are covered with a layer of rubber defining the distal portion of the compression portion.

10. A power transmission belt (10, 13, 113, 213) as claimed in any of claims 1 to 8, wherein each reinforcing fabric layer includes a layer of rubber laminated thereto.

**Patentansprüche**

1. Kraftübertragungsriemen (10, 13, 113, 213) mit:

einer Vielzahl innerer, in Querrichtung mit gegenseitigen Abständen parallel angeordneter offenkantiger Rippen (15, 115), wobei benach-

barte Rippen an ihren äusseren Begrenzungsflächen aneinander anliegen;

einem äusseren, in Querrichtung sich erstreckenden Teil (14, 114), mit dem die Rippen unter Bildung eines vielrippigen Riemens (10, 13, 113, 213) verbunden sind, wobei der äussere in Querrichtung sich erstreckende Teil (14, 114) eine verbindende Kautschukschicht (26) aufweist, die an den äussersten Teil der Rippen anschliesst;

einer Vielzahl von in Längsrichtung sich erstreckenden Zugsträngen (17, 117, 217); und

wenigstens einer in Querrichtung sich erstreckenden verstärkenden Gewebeeinlage (21, 221) welche in jeder Rippe angeordnet ist und deren seitliche Ränder an den offenen Kanten der Rippen freiliegen,

dadurch gekennzeichnet, dass die verstärkende Gewebeeinlage oder jede der verstärkenden Gewebeeinlagen (21, 221) in einer innersten Druckzone (20, 120, 220) einer jeden Rippe eingebettet ist, wobei die innerste Druckzone den von der verbindenden Schicht entfernt liegenden Teil einer jeden Rippe bildet und wobei die verstärkende Gewebeeinlage oder jede der verstärkenden Gewebeeinlagen (21, 221) mittels der verbindenden Schicht, durch welche die parallele Ausrichtung der Rippen aufrechterhalten ist, mit der entsprechenden Gewebeeinlage einer jeden der anderen Rippen seitlich abgeglichen ist, derart, dass ein geräuscharmer Lauf des Riemens gewährleistet ist.

2. Kraftübertragungsriemen (10, 13, 213) nach Anspruch 1, dadurch gekennzeichnet, dass die Zugstränge (17, 217) in einer Zugzone (19, 219) des Riemens im äusseren Teil des Riemens angeordnet sind und dass der Riemen Einschnitte (16, 216) zwischen den Rippen aufweist, wobei sich die Rippen aus dem an die verbindende Kautschukschicht angrenzenden Bereich einwärts zu der innersten Druckzone erstrecken.

3. Kraftübertragungsriemen (10, 113) nach Anspruch 1, dadurch gekennzeichnet, dass die Zugstränge (117) innerhalb einer Zugzone (119) angeordnet sind, welche in dem an den äusseren Teilen des Riemens angrenzenden Bereichs innerhalb der Rippen angeordnet ist, und dass der Riemen Einschnitte, (116) zwischen den Rippen aufweist, wobei sich die Rippen einwärts vom äusseren Teil des Riemens zu seinem innersten erstrecken.

4. Kraftübertragungsriemen (10, 213) nach einem der vorangehenden Ansprüche, dadurch gekennzeichnet, dass die innerste Druckzone (220) einer jeden Rippe eine Vielzahl von quer verlaufenden und in Längsrichtung mit Abständen voneinander angeordneten, nach innen offenen Einschnitten (227) aufweist.

5. Kraftübertragungsriemen (10, 213) nach Anspruch 4, dadurch gekennzeichnet, dass die verstärkenden Gewebeeinlagen (221) übereinander liegen und nach aussen von den quer verlaufenden Einschnitten (227) getrennt sind.

6. Kraftübertragungsriemen (10, 213) nach Anspruch 4 oder 5, dadurch gekennzeichnet, dass die quer verlaufenden Einschnitte (227) bogenförmig sind und die Einschnitte der einzelnen Rippen über den Riemen in Querrichtung abgeglichen sind.

7. Kraftübertragungsriemen (10, 13, 113, 213) nach einem der vorangehenden Ansprüche, dadurch gekennzeichnet, dass kurze quer verlaufende Verstärkungsfasern (24, 124, 224) in der Druckzone (20, 120, 220) in jeder Rippe ausserhalb der verstärkenden Gewebeeinlage oder Gewebeeinlagen vorgesehen sind.

8. Kraftübertragungsriemen (10, 13, 113, 213) nach einem der vorangehenden Ansprüche, dadurch gekennzeichnet, dass die verstärkenden Gewebeeinlagen wenigstens eines der folgenden Charakteristika aufweisen:

(a) eine Jutefaser enthalten;

(b) aus Baumwollgarn gebildet sind;

(c) eine aus gekräuselten Nylongarn gebildete Kette aufweisen;

(d) aus Garnen gebildet sind, welche aus einer Mischung aus Baumwollgarn und Kunstharzfasern gebildet sind;

(e) eine aus gekräuseltem Garn gebildete Kette einschliessen;

(f) Kette und Schuss aufweisen, welche miteinander einen Kreuzungswinkel im Bereich von annähernd 95 bis 150° bilden; und

(g) diagonal geschnitten sind.

9. Kraftübertragungsriemen (10, 13, 113, 213) nach einem der vorangehenden Ansprüche, dadurch gekennzeichnet, dass die verstärkenden Gewebeeinlagen (21, 221) mit einer Kautschukschicht abgedeckt sind, welche den von der verbindenden Schicht entfernt liegenden Teil der Druckzone bildet.

10. Kraftübertragungsriemen (10, 13, 113, 213) nach einem der Ansprüche 1 bis 8, dadurch gekennzeichnet, dass jede der verstärkenden Gewebeeinlagen eine mit ihr durch laminieren verbundene Kautschukschicht einschliesst.

**Revendications**

1. Courroie de transmission de puissance (10, 13, 113, 213) comportant:

- plusieurs nervures parallèles internes (15, 115) à flancs ouverts, espacées transversalement, les nervures adjacentes étant contiguës par leurs bords externes;

- une partie externe (14, 114) s'étendant transversalement à laquelle sont réunies les nervures afin de définir une courroie à nervures multiples (10, 13, 113, 213), la partie externe (14, 114) s'étendant transversalement comprenant une couche (26) de liaison en caoutchouc adjacente à la partie la plus externe des nervures;

- plusieurs câbles de traction (17, 117, 217) s'étendant longitudinalement; et

- au moins une couche d'un tissu de renforcement (21, 221) s'étendant transversalement, disposée dans chaque nervure et ayant des bords latéraux découverts sur les flancs ouverts des nervures,

caractérisée en ce que la couche ou chaque couche de tissu de renforcement (21, 221) est

noyée dans une partie de compression (20, 120, 220) la plus interne de chaque nervure, cette partie la plus interne de compression délimitant la partie distale de chaque nervure et la couche ou chaque couche de tissu de renforcement (21, 221) étant maintenue alignée latéralement avec la couche de tissu correspondante dans chacune des autres nervures par la couche de liaison qui maintient les nervures suivant une disposition mutuelle parallèle afin d'assurer un fonctionnement silencieux de la courroie.

2. Courroie de transmission d'énergie (10, 13, 213) suivant la revendication 1, caractérisée en outre en ce que les câbles de traction (17, 217) sont disposés dans une partie de traction (19, 219) de la courroie dans la partie externe de celle-ci, et dans laquelle la courroie délimite des gorges (16, 216) entre les nervures, ces dernières s'étendant vers l'intérieur depuis le voisinage de la couche de liaison en caoutchouc jusqu'à la partie la plus interne de compression.

3. Courroie de transmission d'énergie (10, 113) suivant la revendication 1, caractérisée en outre en ce que les câbles de traction (117) sont disposés dans un corps de traction (119) de la courroie dans les nervures et au voisinage de la partie externe de la courroie, et dans laquelle la courroie délimite des gorges (116) entre les nervures, ces dernières s'étendant vers l'intérieur depuis la partie externe de la courroie jusqu'à la partie la plus interne.

4. Courroie de transmission de puissance (10, 213) suivant l'une quelconque des revendications précédentes, caractérisée en outre en ce que la partie la plus interne de compression (220) de chaque nervure délimite plusieurs gorges transversales (227) espacées longitudinalement et ouvertes vers l'intérieur.

5. Courroie de transmission de puissance (10, 213) suivant la revendication 4, caractérisée en outre en ce que les couches de tissu de renforcement (221) se recouvrent et sont espacées vers l'extérieur des gorges transversales (227).

6. Courroie de transmission de puissance (10, 213) suivant la revendication 4 ou 5, caractérisée en outre en ce que les gorges transversales (227) sont incurvées, les gorges des nervures respectives étant alignées transversalement suivant la courroie.

7. Courroie de transmission de puissance (10, 13, 113, 213) suivant l'une quelconque des revendications précédentes, caractérisée en outre en ce que de courtes fibres de renforcement (24, 124, 224) s'étendant transversalement sont prévues dans la partie de compression (20, 120, 220) de chaque nervure vers l'extérieur de la ou des couches de tissu de renforcement.

8. Courroie de transmission de puissance (10, 13, 113, 213) suivant l'une quelconque des revendications précédentes, caractérisée en outre en ce que les couches de tissu de renforcement (21, 221) sont constituées par un tissu ayant au moins l'une des caractéristiques suivantes.

(a) il est constitué par une grosse toile;

(b) il est formé de fil de coton;

(c) il comprend un fil de chaîne formé de fil de nylon ondulé;

(d) il est formé de fil formé d'un mélange de fil de coton et de fibres d'une résine synthétique;

(e) il comprend une chaîne formée d'un fil ondulé;

(f) il comprend une chaîne et une trame se croisant suivant un angle compris dans la plage d'environ 95° à 150°;

(g) il est coupé en biais.

9. Courroie de transmission de puissance (10, 13, 113, 213) suivant l'une quelconque des revendications précédentes, caractérisée en outre en ce que les couches de tissu de renforcement (21, 221) sont recouvertes d'une couche de caoutchouc définissant la partie distale de la partie de compression.

10. Courroie de transmission de puissance (10, 13, 113, 213) suivant l'une quelconque des revendications 1 à 8, dans laquelle chaque couche de tissu de renforcement comprend une couche de caoutchouc avec laquelle elle est stratifiée.

*FIG. 1*

*FIG. 2*

*FIG. 3*

*FIG. 4*